# EUROPÄISCHE PATENTSCHRIFT

(11) **EP 0 682 397 B1**
(45) Veröffentlichungstag und Bekanntmachung des Hinweises auf die Patenterteilung: **03.01.1996**
(21) Anmeldenummer: 94107423.9
(22) Anmeldetag: 13.05.1994
(51) Int. Cl.: H02K 7/14, H02K 5/15, H02K 5/24, H02K 7/08

(54) **Motor-Pumpen-Aggregat, insbesondere für einen ABS-Antrieb**
Motor-pump unit, in particular for an ABS-drive
Groupe moto-pompe, en particulier pour la commande d'un ABS

(43) Veröffentlichungstag der Anmeldung: 15.11.1995
(73) Patentinhaber: SIEMENS AKTIENGESELLSCHAFT, D-80333 München (DE)
(72) Erfinder: Deynet, Rolf, Dipl.-Ing., D-97074 Würzburg (DE)

(56) Entgegenhaltungen:
- WO-A-94/03961
- DE-A- 4 235 962
- US-A- 4 551 074

## Beschreibung

Die Erfindung bezieht sich auf ein Motor-Pumpen-Aggregat, insbesondere für einen ABS-Antrieb, gemäß Patentanspruch 1.

Durch die DE-A1-42 35 962 ist ein topfförmiges Motorgehäuse eines Kommutatormotors bekannt, das mit seiner offenen Seite durch ein Flachdichtungselement dichtend an ein Getriebegehäuse angeflanscht ist. Als Flachdichtungselement ist dabei die an der offenen Motorgehäuseseite gehaltene ebene Bürstentragplatte des Kommutatormotors vorgesehen, die gleichzeitig als Zentrierelement für ein auf der Rotorwelle des Kommutators fest angeordnetes Lager dient und als Deckel mit dem Motorgehäuse fest verbindbar ist; zur Abdichtung sind an die Stirnfläche der Bürstentragplatte am äußeren Rand dem Getriebegehäuse zugewandte Dichtungslippen einstückig angeformt.

Durch die EP-A2-0 081 720 ist eine elektrische Kleinmaschine mit beidseitigen getrennten Lagerschildern bekannt; ein Lagerelement in einem der Lagerschilder ragt mit einem axialen Abschnitt über das Motorgehäuse und den Lagerschild hinaus und dient als Paßsitz für eine an der elektrischen Kleinmaschine befestigbare Baugruppe.

Durch die WO 94/03961 ist ein Kommutatormotor mit topfförmigem Motorgehäuse zum Antrieb einer topfbodenseitig an den Kommutatormotor anzuflanschenden Hydraulik-Pumpe für ein Kfz-Antiblockier-Bremssystem bekannt, bei dem in den Topfboden des topfförmigen Motorgehäuses ein nach axial außen vorstehender, ebenfalls im wesentlichen topfförmiger Lagerhals eingeformt ist, der radial innen der Lagerungsaufnahme für die Rotorwelle dient und radial außen in eine axiale Befestigungsaufnahme des Pumpengehäuses einsteckbar ist. Durch eine zentral mittige Öffnung im Topfboden des Lagerhalses ragt ein am äußersten Ende der Rotorwelle angeformter Exzenter zum Antrieb von Pumpenstößeln in das Pumpengehäuse. An der dem Pumpengehäuse abgewandten B-Seite des Kommutatormotors sind rotorseitig ein Kommutator und statorseitig eine Bürstenhalterung angeordnet; die offene Seite des Motorgehäuses wird durch einen Lagerschild abgeschlossen, der gleichzeitig der Lageraufnahme des anderen Endes der Rotorwelle dient. Von der B-Seite her ist über das mit dem B-seitigen Lagerschild verschlossene Motorgehäuse eine, insbesondere bei senkrechter Einbaulage des Aggregats mit kopfseitig angeordnetem Kommutatormotor, feuchtigkeitsschützende topfförmige Kunststoff-Abdeckkappe aufgeschoben, die auch einen axialen Kabelkanal aufweist, derart daß B-seitig aus dem Motorgehäuse ein äußeres Anschlußkabel dichtend herausführbar ist.

Gemäß Aufgabe vorliegender Erfindung soll bei gewährleisteter Feuchtigkeitsdichtigkeit und einfacher Fertigungs- und Montagetechnik die axiale Kompaktheit eines vorzugsweise mittels einer von außen in das Motorgehäuse dichtend einführbaren Anschlußleitung speisbaren Motor-Pumpen-Aggregats weiter verbessert werden. Die Lösung dieser Aufgabe gelingt durch die Lehre des Patentanspruchs 1; vorteilhafte Ausgestaltungen der Erfindung sind jeweils Gegenstand der Unteransprüche.

Die erfindungsgemäße Ausführung eines Motor-Pumpen-Aggregats erlaubt eine kompakte, leicht zueinander zentriert montierbare und gegen das Eindringen von Feuchtigkeit bzw. Leckflüssigkeit abdichtbare Baueinheit.

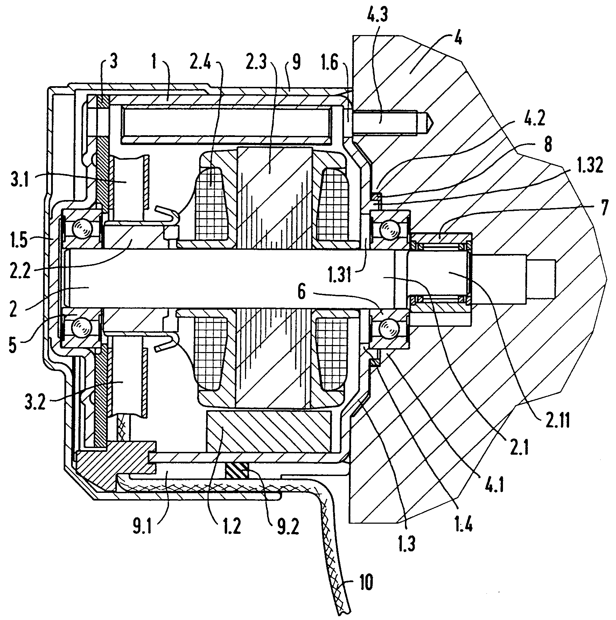

Die Erfindung sowie weitere vorteilhafte Ausgestaltungen der Erfindung gemäß Merkmalen der Unteransprüche werden im folgenden anhand eines schematisch dargestellten Ausführungsbeispiel in der Zeichnung näher erläutert.

Die Figur zeigt in einem axialen Teil-Längsschnitt ein Motor-Pumpen-Aggregat mit einem topfförmigen Motorgehäuse 1 eines Kommutatormotors, das mit seiner Topfbodenseite 1.3 stirnseitig und nach außen feuchtigkeitsdicht abgedichtet gegen ein Pumpengehäuse 4 anliegt und mit diesem verschraubbar ist. Am Innenumfang des Motorgehäuses 1 sind zur magnetischen Erregung Erregermagnete 1.2 befestigt. Eine ein mit einer Rotorwicklung 2.4 bewickeltes Rotorblechpaket 2.3 sowie einen mit der Rotorwicklung 2.4 verbundenen Kommutator 2.2 aufnehmende

Rotorwelle 2 ist B-seitig in einem als Kugellager ausgebildeten Rotorwellenlager 5 und A-seitig in einem ebenfalls als Kugellager ausgebildeten Rotorwellenlager 6 drehbar gelagert. Das B-seitige Rotorwellenlager 5 ist in einem Lagerschild 1.5 gehaltert, das die offene Stirnseite des Motorgehäuses 1 abschließt. Dem Lagerschild 1.5 ist axial vorgelagert eine ebenfalls an dem Motorgehäuse 1 befestigte Bürstenhalterung 3, die mit der Oberfläche des Kommutators 2.2 kontaktierende Bürsten 3.1;3.2 aufnimmt.

Die Rotorwelle 2 ragt A-seitig mit einem verlängerten Rotorwellenende 2.1 durch eine Mittelöffnung 1.31 der Topfbodenseite 1.3 des Motorgehäuses 1. Das A-seitige Rotorwellenlager 6 ist axial auf dieses Rotorwellenende 2.1 im Festsitz aufgesteckt und in einer Lageraufnahme 4.1 des Pumpengehäuses 4 zentriert zu diesem unmittelbar gelagert; in Richtung der B-Seite der Rotorwelle 2 ist das Rotorwellenende 2.1 über das Rotorwellenlager 6 gegen die Topfbodenseite 1.3 des Motorgehäuses 1 axial abgestützt, wozu in vorteilhafter Weise über den Umfang verteilte, gegenüber der Mittelöffnung 1.31 radial vorstehende Anlageteile 1.4 vorgesehen sind.

Zur Zentrierung des Motorgehäuses 1 vor seiner Befestigung über z.B. durch Befestigungsöffnungen 1.6 durchsteckbare und in Schraubgewinden 4.3 des Pumpengehäuses 4 einschraubbare Befestigungsschrauben ist nach einer Ausgestaltung der Erfindung eine radiale Abstützung des Motorgehäuses 1 über seine Topfbodenseite 1.3 vorgesehen, wozu in vorteilhafter Weise im Bereich der Mittelöffnung 1.31 axial vorstehende Anlageteile, insbesondere in Form eines umlaufenden axial vorstehenden Anlagerandes 1.32 angeformt sind, der über einen kurzen axialen Bereich, vorzugsweise im Schiebesitz, auf dem Außenumfang des A-seitigen Rotorwellenlagers 6 aufliegt.

Zur Abdichtung der Anlagefläche zwischen dem Motorgehäuse 1 einerseits und dem Pumpengehäuse 4 andererseits gegen ein Eindringen von äußerer Feuchtigkeit bzw. zwischen dem Motorgehäuse 1 und dem Pumpengehäuse 4 gegen ein Eindringen von Leckflüssigkeit aus dem Pumpengehäuse 4 in das Motorgehäuse 1 dient ein Dichtungsring 8, der einerseits auf dem als Dichtungsschulter mitbenutzten, axial vorstehenden Anlageteil 1.32 außen anliegt und andererseits gegen eine korrespondierende übergreifende Dichtungsausnehmung 4.2 des Pumpengehäuses 4 angedrückt ist.

Der Kommutatormotor ist nach einer Ausgestaltung der Erfindung als vormontierbare Bauteileinheit mit an der Topfrandseite des Motorgehäuses 1 gehaltertem B-seitigen Lagerschild 1.6 und in diesem Bereich befestigter Bürstenhalterung 3 sowie mit in Richtung der A-Seite an der Bürstenhalterung 3 axial abstützbarem B-seitigen Rotorwellenlager 5 zentriert zu dem Pumpengehäuse 4 in dessen Lageraufnahme 4.1 über das auf das Rotorwellenende 2.1 aufgesteckte A-seitige Rotorwellenlager 8 einsteckbar, dadurch relativ zum Pumpengehäuse 4 zentrierbar und anschließend durch Verschrauben mit dem Pumpengehäuse 4 fest verbindbar.

Das in das Pumpengehäuse 4 ragende Rotorwellenende 2.1 ist nach einer Ausgestaltung der Erfindung an seinem äußersten axialen Ende mit einem Exzenter 2.11 mit einem axial davor umgreifenden Lager 7, insbesondere einem Nagellager, versehen, das im Sinne einer vorteilhaften axialen Baulängenverkürzung axial direkt an dem motorgehäuseseitig vorgelagerten, für die zentrierte Lagerung des Rotorwellenendes 2.1 in dem Pumpengehäuse 4 vorgesehenen A-seitigen Rotorwellenlager 6 axial abgestützt ist.

Unter Ausnutzung von an sich im Pumpengehäuse 4 zur Verfügung stehendem, ansonsten ungenutzten Einbauraum ist im Sinne einer weiteren axialen Baulängenverkürzung die Topfbodenseite 1.3 des Motorgehäuses 1 zumindest in ihrem lageröffnungsseitigen Bereich in eine entsprechend axiale Ausnehmung des Pumpengehäuses 4 eingeformt.

Um auf einfache fertigungs- und montagetechnische Weise einen für den Einsatz als Antrieb eines Kraftfahrzeug-Antiblockierbremssystems vorteilhaften feuchtigkeitsgeschützten Abschluß des Elektromotors gewährleisten zu können, ist für das an seinem einen Ende durch den einstückigen Topfboden und den radial außerhalb der Topfboden-Mittelöffnung 1.31 umlaufenden Dichtungsring 8 bereits nach außen leicht abdichtbaren Motorgehäuse 1 von dessen Topfrandseite her eine topfförmige feuchtigkeitsschützende Abdeckkappe 9 auf das Motorgehäuse 1 aufgesteckt. In weiterer Ausgestaltung der Erfindung ist die Abdeckkappe 9 mit eine axialen Kabelkanal 9.1 für eine B-seitigen, in das Innere des Motorgehäuses 1 eingeführte äußere Anschlußleitung 10 versehen. Eine innerhalb des Kabelkanals 9.1 die äußere Anschlußleitung 10 umgreifende Dichtung 9.2 dient zum Schutz gegen ein Eindringen von Feuchtigkeit in diesem Bereich.

## Patentansprüche

1. Motor-Pumpen-Aggregat, insbesondere für einen ABS-Antrieb, mit stirnseitig gegeneinanderliegendem Motorgehäuse (1) eines Kommutatormotors einerseits und einem Pumpengehäuse (4) andererseits und mit einem in das Pumpengehäuse (4) ragenden Rotorwellenende (2.1) mit den Merkmalen:
a) Das topfförmig ausgebildete Motorgehäuse (1) liegt mit seiner Topfbodenseite (1.3) nach außen feuchtigkeitsgeschützt gegen das Pumpengehäuse (4) an;
b) die Topfbodenseite (1.3) des Motorgehäuses (1) ist im Sinne einer zusätzlichen axialen Baulängenminderung zumindest in ihrem mittelöffnungsseitigen Bereich in eine entsprechende axiale Ausnehmung des Pumpengehäuses (4) eingeformt;
c) das Rotorwellenende (2.1) ragt durch eine Mittelöffnung (1.31) der Topfbodenseite (1.3) und ist A-seitig über ein im Festsitz aufgestecktes Rotorwellenlager (6) unmittelbar in einer Lageraufnahme (4.1) des Pumpengehäuses (4) zu diesem zentriert gelagert;
d) das Rotorwellenende (2.1) ist über das A-seitig aufgesteckte Rotorwellenlager (6) in Richtung der B-Seite der Rotorwelle (2) gegen die Topfbodenseite (1.3) des Motorgehäuses (1) axial abgestützt;
e) das Motorgehäuse (1) ist gegenüber dem Pumpengehäuse (4) durch einen auf einer axial vorstehenden Dichtungsschulter aufliegenden Dichtungsring (8) abgedichtet, der radial außen gegen eine die Dichtungsschulter axial über- greifende Dichtungsausnehmung (4.2) des Pumpengehäuses (4) anliegt.

2. Motor-Pumpen-Aggregat nach Anspruch 1 mit dem Merkmal:
f) Das Motorgehäuse (1) ist über seine Topfbodenseite (1.3) an dem A-seitigen Rotorwellenlager (6) radial abgestützt.

3. Motor-Pumpen-Aggregat nach Anspruch 2 mit dem Merkmal:
g) Die Topfbodenseite (1.3) liegt im Bereich der Mittelöffnung (1.31) mit einem axial vorstehenden topfbodenseitigen Anlageteil (1.32), vorzugsweise in axialem Schiebesitz, radial an dem A-seitigen Rotorwellenlager (6) an.

4. Motor-Pumpen-Aggregat nach zumindest einem der vorhergehenden Ansprüche mit dem Merkmal:
h) Der Kommutatormotor ist als vormontierbare Bauteileinheit mit an der Topfrandseite des Motorgehäuses (1) gehaltertem B-seitigem Lagerschild (1.6) und befestigter Bürstenhalterung (3) sowie mit in Richtung der A-Seite an der Bürstenhalterung (3) axial abstützbarem B-seitigen Rotorwellenlager (5) zentriert zu dem Pumpengehäuse (4) in dessen Lageraufnahme (4.1) axial einsteckbar.

5. Motor-Pumpen-Aggregat nach Anspruch 3 oder Anspruch 4 wenn rückbezogen auf Anspruch 3 mit dem Merkmal:
i) Als umlaufende Dichtungsschulter ist der radial innen im Sinne einer Zentrierung des Pumpengehäuses (1) auf einem Teilbereich des A-seitigen Rotorwellenlagers (6) aufliegende topfbodenseitige Anlageteil (1.32) der Topfbodenseite (1.3) vorgesehen.

6. Motor-Pumpen-Aggregat nach zumindest einem der vorhergehenden Ansprüche mit dem Merkmal:
j) Von dem B-seitigen Ende her ist eine Abdeckkappe (9) auf das Motorgehäuse (1) aufgesteckt.

7. Motor-Pumpen-Aggregat nach Anspruch 6 mit dem Merkmal:
k) Die Abdeckkappe (9) ist mit einem Kabelkanal (9.1) für eine B-seitig in das Innere des Motorgehäuses (1) dichtend eingeführte äußere Anschlußleitung (10) versehen.

8. Motor-Pumpen-Aggregat nach zumindest einem der vorhergehenden Ansprüche mit dem Merkmal:
1) Das in das Pumpengehäuse (4) ragende Rotorwellenende (2.1) ist an seinem äußersten axialen Ende mit einem Exzenter (2.11) und mit einem umgreifenden Lager (7), insbesondere Nadellager, versehen, das axial an dem motorgehäuseseitig vorgelagerten, für die zentrierte Lagerung des Rotorwellenendes (2.1) in dem Pumpengehäuse (4) vorgesehenen A-seitigen Lager (6) axial abgestützt ist.

## Claims

1. Motor-pump unit, particularly for an ABS drive, with a motor casing (1) of a commutator motor, on the one hand, and a pump casing (4), on the other, which rest against one another at their ends, and with a rotor-shaft end (2.1) projecting into the pump casing (4), having the following features:
a) the motor casing (1), which is of cup-shaped design, rests against the pump casing (4) with its cup bottom end (1.3) in a manner protected against moisture from the outside;
b) to provide an additional reduction in the overall axial length, the cup bottom end (1.3) of the motor casing (1) is, at least in the region of its central opening, deformed into a corresponding axial recess in the pump casing (4);
c) the rotor-shaft end (2.1) projects through a central opening (1.31) in the cup bottom end (1.3) and, at the drive end, is supported directly in a bearing seat (4.1) of the pump casing (4), and in a manner centred with respect to the latter, by way of a rotor-shaft bearing (6) mounted on it with an interference fit;
d) the rotor-shaft end (2.1) is supported axially in the direction of the non-drive end of the rotor shaft (2) against the cup bottom end (1.3) of the motor casing (1) via the rotor-shaft bearing (6) mounted on the drive end;
e) the motor casing (1) is sealed off relative to the pump casing (4) by a sealing ring (8) which rests on an axially projecting sealing shoulder and, radially at the outside, rests against a seal recess (4.2) in the pump casing (4), the said seal recess overlapping the sealing shoulder axially.

2. Motor-pump unit according to Claim 1 having the following feature:
f) the motor casing (1) is supported radially on the drive-end rotor-shaft bearing (6) by way of its cup bottom end (1.3).

3. Motor-pump unit according to Claim 2 having the following feature:
g) in the region of the central opening (1.31), the cup bottom end (1.3) rests radially on the drive-end rotor-shaft bearing (6) by means of an axially projecting locating part (1.32) on the cup bottom end, preferably with an axial sliding fit.

4. Motor-pump unit according to at least one of the preceding claims having the following feature:
h) the commutator motor can be inserted axially and in a manner centred with respect to the pump casing (4) into the bearing seat (4.1) of the latter, as a pre-assemblable module with a non-drive end bearing plate (1.5) held at the cup rim end of the motor casing (1) and with a brush holder (3) attached and with a non-drive end rotor-shaft bearing (5) that can be supported axially on the brush holder (3) in the direction of the drive end.

5. Motor-pump unit according to Claim 3 or Claim 4 where the latter refers back to Claim 3, having the following feature:
i) the locating part (1.32) of the cup bottom end (1.3), which rests radially at the inside on a partial area of the drive-end rotor-shaft bearing (6) to produce centring of the pump casing (1), being provided as the all-round sealing shoulder.

6. Motor-pump unit according to at least one of the preceding claims, having the following feature:
j) a cap (9) is placed on the motor casing (1) from the non-drive end.

7. Motor-pump unit according to Claim 6, having the following feature:
k) the cap (9) is provided with a cable duct (9.1) for an external connecting lead (10) which is introduced in a sealed manner into the interior of the motor casing (1) at the non-drive end.

8. Motor-pump unit according to at least one of the preceding claims, having the following feature:
1) the rotor-shaft end (2.1) projecting into the pump casing (4) is provided at its outermost axial end with an eccentric (2.11) and with a surrounding bearing (7), in particular a needle bearing, which is supported axially against the drive-end bearing (6) situated in front of it on the motor-casing side and provided for the centred support of the rotor-shaft end (2.1) in the pump casing (4).

## Revendications

1. Groupe moto-pompe, notamment pour un dispositif d'entraînement d'ABS, comportant une carcasse (1) d'un moteur à collecteur d'une part et un corps de pompe (4) d'autre part, qui sont juxtaposés, et un bout (2.1) de l'arbre du rotor, qui pénètre dans le corps de pompe (4), présentant les caractéristiques suivantes :
a) la carcasse (1), agencée en forme de pot, du moteur s'applique, par le côté (1.3) du fond du pot, au corps de pompe (4), en étant protégée vis-à-vis de l'humidité extérieure;
b) le côté (1.3) du fond du pot de la carcasse de moteur (1) vient de moulage, en vue d'une réduction supplémentaire de la longueur hors-tout dans le sens axial, au moins dans sa partie située du côté de l'ouverture centrale, dans un évidement axial correspondant du corps de pompe (4);
c) l'extrémité (2.1) de l'arbre du rotor pénètre, par une ouverture centrale (1.31) du côté (1.3) du fond du pot et, sur le côté (A), est supportée d'une manière centrée par rapport au corps de pompe (4), directement dans un logement de palier (4.1) de ce corps, par l'intermédiaire d'un palier (6) de l'arbre du rotor, emmanché selon un ajustement serré;
d) l'extrémité (2.1) de l'arbre du rotor prend appui axialement, par l'intermédiaire du palier (6) de l'arbre du rotor, emmanché sur le côté (A), en direction du côté (B) de l'arbre (2) du rotor, contre le côté (1.3) du fond du pot de la carcasse (1) du moteur;
e) la carcasse (1) du moteur est étanchéifiée par rapport au corps de pompe (4) par une bague d'étanchéité (8), qui s'applique sur un épaulement d'étanchéité qui fait saillie axialement et qui s'applique extérieurement, du point de vue radial, contre un évidement d'étanchéité (4.2) du carter de pompe (4), qui s'accroche axialement sur l'épaulement d'étanchéité.

2. Groupe moto-pompe suivant la revendication 1, présentant la caractéristique suivante :
f) la carcasse (1) du moteur prend appui radialement, par l'intermédiaire du côté (1.3) du fond du pot, contre le palier (6) de l'arbre du rotor, situé du côté A.

3. Groupe moto-pompe suivant la revendication 2, présentant la caractéristique suivante :
g) le côté (1.3) du fond du pot s'applique radialement, dans la zone de l'ouverture centrale (1.31), par sa partie d'application (1.32) qui fait saillie axialement et est située du côté du fond du pot, radialement sur le palier (6) de l'arbre du rotor, situé sur le côté (A), de préférence selon un ajustement axial coulissant.

4. Groupe moto-pompe suivant au moins l'une des revendications précédentes présentant la caractéristique suivante :
h) le moteur à collecteur, agencé sous la forme d'unité de construction préassemblée avec le flasque de palier (1.6) situé sur le côté B et retenu du côté du bord du pot de la carcasse (1) du moteur et un porte-balai fixé (3) ainsi qu'avec le palier (5) de l'arbre du rotor, situé sur le côté B et pouvant prendre appui axialement sur le porte-balai (3) en direction du côté A, peut être enfiché axialement, d'une manière centrée sur le corps de pompe (4), dans le logement de palier (4.1) de ce dernier.

5. Groupe moto-pompe suivant la revendication 3 ou la revendication 4, considérée comme dépendante de la revendication 3, présentant la caractéristique suivante :
i) comme épaulement circonférentiel d'étanchéité, il est prévu la partie d'application (1.32) du côté (1.3) du fond du pot, qui est située du côté de ce fond et s'applique, intérieurement du point de vue radial, en vue d'un centrage du corps de pompe (1), sur une partie du palier (6) de l'arbre du rotor, situé du côté A.

6. Groupe moto-pompe suivant au moins l'une des revendications précédentes, présentant la caractéristique suivante :
j) un capotage de recouvrement (9) est emmanché sur la carcasse (1) du moteur à partir de l'extrémité située du côté B.

7. Groupe moto-pompe suivant la revendication 6, présentant la caractéristique suivante :
k) le capotage de recouvrement (9) est muni d'un conduit à câble (9.1) pour une ligne extérieure de raccordement (10) introduite d'une manière étanche, du côté B, à l'intérieur de la carcasse (1) du moteur.

8. Groupe moto-pompe suivant au moins l'une des revendications précédentes, présentant la caractéristique suivante :
1) le bout (2.1) de l'arbre du rotor, qui pénètre dans le corps de pompe (4), comporte, sur son extrémité axiale la plus extérieure, un excentrique (2.11) et un palier enveloppant (7), notamment un roulement à aiguilles, qui prend appui axialement du palier (6) situé sur le côté A, qui est préalablement monté du côté de la carcasse du moteur et est prévu pour le soutien centré du bout (2.1) de l'arbre du rotor dans le corps de pompe (4).
